(19) Europäisches Patentamt
European Patent Office
Office européen des brevets

(11) **EP 3 877 558 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **19801822.8**

(22) Anmeldetag: **07.11.2019**

(51) Internationale Patentklassifikation (IPC):
*C21D 8/12* (2006.01)   *H01F 1/147* (2006.01)
*C22C 38/02* (2006.01)   *C22C 38/04* (2006.01)
*C22C 38/06* (2006.01)   *C22C 38/14* (2006.01)
*C22C 38/18* (2006.01)   *C22C 38/34* (2006.01)
*C21D 1/34* (2006.01)   *C21D 1/42* (2006.01)

(52) Gemeinsame Patentklassifikation (CPC):
**C21D 8/1233; C21D 1/34; C21D 1/42; C21D 6/008; C21D 8/1272; C22C 38/02; C22C 38/04; C22C 38/06; C22C 38/14; C22C 38/18; C22C 38/34; H01F 1/16;** H01F 1/14775; Y02P 10/25

(86) Internationale Anmeldenummer:
**PCT/EP2019/080537**

(87) Internationale Veröffentlichungsnummer:
**WO 2020/094787 (14.05.2020 Gazette 2020/20)**

(54) **ELEKTROBAND ODER -BLECH FÜR HÖHERFREQUENTE ELEKTROMOTORANWENDUNGEN MIT VERBESSERTER POLARISATION UND GERINGEN UMMAGNETISIERUNGSVERLUSTEN**

ELECTRIC STEEL STRIP OR SHEET FOR HIGHER FREQUENCY ELECTRIC MOTOR APPLICATIONS, WITH IMPROVED POLARISATION AND LOW MAGNETIC LOSSES

BANDE OU TÔLE ÉLECTRIQUE POUR APPLICATIONS DE MOTEUR ÉLECTRIQUE HAUTE FRÉQUENCE PRÉSENTANT UNE POLARISATION AMÉLIORÉE ET DE FAIBLES PERTES PAR INVERSION MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2018 PCT/EP2018/080598**

(43) Veröffentlichungstag der Anmeldung:
**15.09.2021 Patentblatt 2021/37**

(73) Patentinhaber: **ThyssenKrupp Steel Europe AG 47166 Duisburg (DE)**

(72) Erfinder:
• **VIDOVIC, Anton**
 **45134 Essen (DE)**
• **TELGER, Karl**
 **48653 Coesfeld (DE)**
• **FISCHER, Olaf**
 **44866 Bochum (DE)**
• **STRECKER, Nina Maria**
 **45147 Essen (DE)**

(74) Vertreter: **ThyssenKrupp Steel Europe AG Patente/Patent Department Kaiser-Wilhelm-Straße 100 47166 Duisburg (DE)**

(56) Entgegenhaltungen:
EP-A1- 2 657 355      EP-A1- 2 821 511
EP-A1- 2 826 872      EP-A1- 3 263 719
EP-A1- 3 388 537      WO-A1-2018/210690
JP-A- 2013 010 982

EP 3 877 558 B1

## Beschreibung

### Technisches Gebiet

Die vorliegende Erfindung betrifft ein nicht kornorientiertes Elektroband oder -blech mit folgender Zusammensetzung (aller Angaben in Gew.-%) 3,2 bis 3,4 Si, 0,85 bis 1,1 Al, 0,07 bis 0,2 Mn, 0,01 bis 0,04 P, 0,0003 bis 0,0030 S, 0,0005 bis 0,0025 N, 0,0010 bis 0,0050 C, 0,0015 bis 0,0040 Ti, 0,01 bis 0,08 Cr, bis zu 0,05 in Summe von Nb+Mo+V, Rest Fe und unvermeidbare Verunreinigungen bis zu einer Gesamtmenge von 1,0 Gew-%, dadurch gekennzeichnet, dass es einen spezifischen elektrischen Widerstand bei 50 °C von 0,62 bis 0,65 $\mu\Omega$m aufweist, ein Verfahren zu seiner Herstellung und dessen Verwendung in Eisenkernen von rotierenden elektrischen Maschinen, insbesondere in Elektromotoren, beispielsweise in Elektro- oder Hybridfahrzeugen, und Generatoren.

### Technischer Hintergrund

Nicht kornorientiertes (NO) Elektroband oder -blech wird zur Verstärkung des magnetischen Flusses in Eisenkernen von rotierenden elektrischen Maschinen, d.h. in Motoren und Generatoren, verwendet. Für zukünftige hocheffiziente elektrische Maschinen, z.B. Elektromotoren mit hohen Drehzahlen für Elektrofahrzeuge, werden spezielle NO Elektroband oder -blechsorten mit einem niedrigen Ummagnetisierungsverlust bei hohen Frequenzen und hoher magnetischer Polarisation bzw. Induktion mit hoher Permeabilität benötigt.

Elektrobänder oder -bleche der hier in Rede stehenden Art gefertigten Bauteile erfordern die oben genannten magnetischen Eigenschaften, die von den heute zur Verfügung stehenden NO-Elektroband oder - blechsorten oft nicht erfüllt werden können. Aus dem Stand der Technik sind nicht kornorientierte Elektrobänder und Verfahren zu ihrer Herstellung bereits bekannt.

EP 2 612 942 offenbart ein nicht kornorientiertes Elektroband oder -blech aus einem Stahl, der neben Eisen und unvermeidbaren Verunreinigungen 1,0 bis 4,5 Gew.-% Si, bis zu 2,0 Gew.-% Al, bis zu 1,0 Gew.-% Mn, bis zu 0,01 Gew.-% C, bis zu 0,01 Gew.-% N, bis zu 0,012 Gew.-% S, 0,1 bis 0,5 Gew.% Ti und 0,1 bis 0,3 Gew.-% P enthält, wobei für das Verhältnis Gehalt Ti/Gehalt P, jeweils in Gew.-%, 1,0 ≤ Gehalt Ti/Gehalt P ≤ 2,0 gilt. Das nicht kornorientierte Elektroband oder -blech und aus einem solchen Blech oder Band gefertigte Bauteile für elektrotechnische Anwendungen zeichnen sich durch erhöhte Festigkeiten und gleichzeitig gute magnetische Eigenschaften aus. Hergestellt wird das NO-Elektroband oder -blech gemäß EP 2 612 942 dadurch, dass ein aus einem Stahl mit der voranstehend genannten Zusammensetzung bestehendes Warmband zu einem Kaltband kaltgewalzt und dieses Kaltband anschließend einer Schlussglühung unterzogen wird. Die Polarisierbarkeit bei niedrigen Frequenzen und die mechanischen Eigenschaften der Elektrobänder bzw. -bleche gemäß der EP 2 612 942 sind noch zu verbessern.

EP 2 840 157 offenbart ein nicht kornorientiertes Elektroband oder -blech, insbesondere für elektrotechnische Anwendungen, hergestellt aus einem Stahl, der neben Eisen und unvermeidbaren Verunreinigungen 2,0 bis 4,5 Gew.-% Si, 0,03 bis 0,3 Gew.-% Si, bis zu 2,0 Gew.-% Al, bis zu 1,0 Gew.-% Mn, bis zu 0,01 Gew.-.% C, bis zu 0,01 Gew.-% N, bis zu 0,001 Gew.% S und bis zu 0,015 Gew.-% P, enthält, wobei im Gefüge des Elektrobands oder -blechs ternäre Fe-Si-Zr-Ausscheidungen vorliegen. EP 2 840 157 offenbart auch ein Verfahren zum Herstellen solcher Elektrobänder und -bleche, welches ein Schlussglühen beinhaltet. Die Polarisierbarkeit bei niedrigen Feldstärken und die mechanischen Eigenschaften des Elektrobands gemäß EP 2 840 157 sind noch zu verbessern.

WO 00/65103 A2 offenbart ein Verfahren zur Herstellung von nicht kornorientiertem Elektroblech, bei dem ein Stahlvormaterial, das weniger als 0,06 Gew.-% C, 0,03 bis 2,5 Gew.-% Si, weniger als 0,4 Gew.-% Al, 0,05 bis 1 Gew.-% Mn und weniger als 0,02 Gew.-% S enthält, zu einem Warmband mit einer Dicke von kleiner 3,5 mm warmgewalzt wird, anschließend gebeizt und nach dem Beizen zu einem Kaltband mit einer Dicke von 0,2 bis 1 mm gewalzt wird. Die mechanischen und die magnetischen Eigenschaften des Elektroblechs gemäß WO 00/65103 A2 können ebenfalls noch verbessert werden.

JP2013010982A offenbart ein nicht kornorientieres Elektroband hergestellt aus einem Stahl, der neben Eisen und unvermeidbaren Verunreinigungen 0,01 Gew.-% oder weniger C, 7 Gew.-% oder weniger Si, 0,03-3 Gew.-% Mn, 0,0050 oder weniger Gew.-% S, 3 Gew.-.% oder weniger Al, 0,050 Gew.-% oder weniger N umfasst und eine Verfahren zur Herstellung dieses Stahls. In dem Herstellungsverfahren wird eine erhöhte Aufheizrate verwendet.

Vor dem Hintergrund des Standes der Technik bestand die Aufgabe der vorliegenden Erfindung darin, ein nicht kornorientiertes Elektroband oder -blech und ein aus einem solchen Band oder Blech gefertigtes Bauteil für elektrotechnische Anwendungen anzugeben, das im unteren Aussteuerungsbereich 100 bis 20 A/m möglichst hohe Polarisationswerte und gleichzeitig bei höheren Frequenzen von 400 Hz, 700 Hz und 1000 Hz niedrige Ummagnetisierungsverluste aufweist.

Darüber hinaus sollte ein Verfahren zur Erzeugung eines solchen NO-Elektroband oder -blechs angegeben werden, das durch eine auf die angegebene Legierung angepasste Schlussglühung besonders niedrige Ummagnetisierungsverluste sowohl bei niedrigen als auch bei höheren Frequenzen bei gleichzeitig verbesserten Polarisationswerten im niedrigen Aussteuerungsbereich aufweist.

Diese Aufgaben werden gelöst durch das erfindungsgemäße nicht kornorientierte Elektroband oder -blech mit folgender Zusammensetzung (aller Angaben in Gew.-%)

3,2 bis 3,4 Si,
0,85 bis 1,1 Al,
0,07 bis zu 0,18 Mn,
0,01 bis 0,04 P,
0,0003 bis 0,0030 S,
0,0005 bis 0,0025 N,
0,0010 bis 0,0050 C,
0,0015 bis zu 0,0040 Ti,
0,01 bis 0,08 Cr
bis zu 0,05 in Summe von Nb+Mo+V,

Rest Fe und unvermeidbare Verunreinigungen bis zu einer Gesamtmenge von 1,0 Gew-%, wobei es einen spezifischen elektrischen Widerstand bei 50 °C von 0,62 bis 0,65 $\mu\Omega$m und eine Enddicke von 0,255 bis 0,31 mm aufweist.

Des Weiteren werden die erfindungsgemäßen Aufgaben gelöst durch das Verfahren zur Herstellung eines erfindungsgemäßen nicht kornorientierten Elektrobands oder -blechs, umfassend mindestens die folgenden Verfahrensschritte:

(A) Bereitstellen eines warmgewalzten, warmbandgeglühten nicht kornorientierten Elektroband oder -blechs, bevorzugt über den konventionellen Fertigungsweg via Stranggießanlage oder über Dünnbrammenfertigung, in einer Dicke von 1,5 bis 2,5 mm,

(B) Kaltwalzen des Elektroband oder -blechs aus Schritt (A) auf eine Dicke von 0,255 bis 0,31 mm, um ein Kaltband zu erhalten,

(C) Schlussglühen des Kaltbands aus Schritt (B), um das nicht kornorientierte Elektroband oder -blech zu erhalten, und

(D) Abkühlen des schlussgeglühten Kaltbands aus Schritt (C) mit einer üblichen mittleren Kühlrate von 1 K/s bis 10 K/s in einer nicht-oxidierenden Atmosphäre, insb. mit höheren Wasserstoffanteilen größer als 70%, bis zu einer unteren Grenztemperatur von 500 °C,

wobei in Schritt (C) das Kaltband aus Schritt (B) zunächst mit einer Aufheizrate von mindestens 40 K/s auf eine Temperatur von 860 bis 940 °C, bevorzugt 880 bis 920 °C, aufgeheizt wird und anschließend mit einer Aufheizrate von 3 bis 20 K/s auf eine Temperatur von 1050 bis 1070 °C aufgeheizt wird, durch ein aus einem, solchen Elektroband oder -blech gefertigtes Bauteil und durch die Verwendung dieses nicht kornorientierten Elektroband oder -blechs in Eisenkernen von rotierenden elektrischen Maschinen, insbesondere in Elektromotoren, beispielsweise in Elektro- oder Hybridfahrzeugen, und Generatoren.

Das erfindungsgemäße nicht kornorientierte Elektroband oder -blech weist eine verbesserte Polarisation J bei 100 bis 200 A/m und eine verbesserte Permeabilität im Bereich von 0,8 bis 1,2 T auf. Gleichzeitig sind die Ummagnetisierungsverluste sowohl bei niedrigen Frequenzen von beispielsweise 50 Hz als auch bei höheren Frequenzen von 400 bis 1000 Hz im Vergleich zu Materialien des Standes der Technik erniedrigt. Dieses Verhalten wird erfindungsgemäß durch die genau angestimmte Legierungszusammensetzung und eine speziell angestimmte Glühung bei der Herstellung erreicht.

Die vorliegende Erfindung betrifft ein nicht kornorientiertes Elektroband oder -blech mit folgender Zusammensetzung (alle Angaben in Gew.-%)

3,20 bis 3,40 Si, bevorzugt 3,25 bis 3,35 Si,
0,85 bis 1,1 Al, bevorzugt 0,95 bis 1,05 Al,
0,07 bis zu 0,18 Mn, bevorzugt 0,14 bis 0,16 Mn,
0,01 bis 0,04 P, bevorzugt 0,015 bis 0,02 P,
0,0003 bis 0,0030 S, bevorzugt 0,0005 bis 0,002 S,
0,0005 bis 0,0025 N, bevorzugt 0,001 bis 0,002 N,
0,0010 bis 0,0050 C, bevorzugt 0,0015 bis 0,0025 C,
0,0015 bis zu 0,0040 Ti, bevorzugt 0,0017 bis 0,0035 Ti,
0,01 bis 0,08 Cr, bevorzugt 0,02 bis 0,06, besonders bevorzugt 0,02 bis 0,04 Cr,
bis zu 0,05 in Summe von Nb+Mo+V,

Rest Fe und unvermeidbare Verunreinigungen bis zu einer Gesamtmenge von 1,0 Gew-%, wobei es einen spezifischen elektrischen Widerstand bei 50 °C von 0,62 bis 0,65 $\mu\Omega$m aufweist Unvermeidbare Verunreinigungen im Rahmen der vorliegenden Erfindung sind beispielsweise , Ni, Cu, As, Pb und Bi.

Das erfindungsgemäße nicht kornorientierte Elektroband oder -blech weist einen spezifischen elektrischen Widerstand bei 50 °C von 0,62 bis 0,65 $\mu\Omega$m, auf. Verfahren zur Bestimmung des spezifischen elektrischen Widerstands sind dem Fachmann an sich bekannt. Verfahren zur Bestimmung des spezifischen elektrischen Widerstands sind dem Fachmann an sich bekannt, beispielsweise anhand einer Vierpunktmessung nach DIN EN 60404-13 : 2008-05 "Magnetische Werkstoffe - Teil 13: Prüfung zur Messung der Dichte, des spezifischen Widerstandes und des Stapelfaktors von Elektroblech und -band".

Ein höherer spezifischer elektrischer Widerstand führt zur Erniedrigung des Ummagnetisierungsverlustes durch Senkung der bei steigender Frequenz entstehenden Wirbelstromverluste.

Im Rahmen der vorliegenden Erfindung bedeutet Elektroband, dass das erfindungsgemäße Material in Form eines Stahlbands vorliegt, d.h. die Länge des Stahlbands ist wesentlich größer als die Breite. Im Rahmen der vorliegenden Erfindung bedeutet Elektroblech, dass das erfindungsgemäße Material in Form von Blechen vorliegt, wobei die Breite und Länge dieser Bleche größenmäßig außer durch die Breite und Länge des Stahlbands, aus dem sie bevorzugt erhalten werden, nicht beschränkt sind. In einer bevorzugten Ausführungsform werden die erfindungsgemäßen Elektrobleche aus den erfindungsgemäßen Elektrobändern durch Schneiden oder Stanzen erhalten. Die erfindungsgemäßen Elektrobleche können beispielsweise in eine entsprechende Form gebracht werden, um dann in Stator oder Rotor eines Elektromotors eingesetzt zu werden.

Des Weiteren betrifft die vorliegende Erfindung das erfindungsgemäße nicht kornorientierte Elektroband oder -blech, wobei die Summe aus C, S, N und Ti höchstens 0,0090 Gew.-%, beträgt.

Das erfindungsgemäße nicht kornorientierte Elektroband oder -blech in der vorliegenden Erfindung weist es eine Enddicke von 0,255 bis 0,31 mm auf. Im Rahmen der vorliegenden Erfindung bedeutet "Enddicke" die Dicke des nicht kornorientierten Elektroband oder -blechs nach dem Kaltwalzen, d.h. in der Form, in der es auch später, beispielsweise in Elektromotoren, eingesetzt wird.

Weiter bevorzugt betrifft die vorliegende Erfindung das erfindungsgemäße nicht kornorientiertes Elektroband oder -blech, wobei bei seiner Herstellung ein Glühschritt bei einer maximalen Temperatur von 1050 bis 1070 °C, bevorzugt 1055 bis 1065 °C erfolgt. Durch diese besondere Art der Herstellung wird ein entsprechendes Elektroband oder -blech erhalten, welches eine verbesserte Polarisation J bei 100 bis 200 A/m und eine verbesserte Permeabilität im Bereich von 0,8 bis 1,2 T aufweist. Gleichzeitig sind die Ummagnetisierungsverluste sowohl bei niedrigen Frequenzen von beispielsweise 50 Hz als auch bei höheren Frequenzen von 400 bis 1000 Hz im Vergleich zu Materialien des Standes der Technik erniedrigt.

Beispielsweise betrifft die vorliegende Erfindung das erfindungsgemäße nicht kornorientierte Elektroband oder -blech, wobei es bei einer Polarisation P von 1,5 T und 50 Hz Verlustwerte von maximal 2,3 W/kg jeweils bei einer Blechdicke von 0,280 bis 0,310 mm, und Verlustwerte von maximal 2,2 W/kg, jeweils bei einer Blechdicke von 0,255 bis 0,280 mm, aufweist.

Bevorzugt betrifft die vorliegende Erfindung das erfindungsgemäße nicht kornorientierte Elektroband oder -blech, wobei es bei einer Polarisation P von 1,0 T und 400 Hz Verlustwerte von maximal 14,2 W/kg jeweils bei einer Blechdicke von 0,280 bis 0,310 mm, und Verlustwerte von maximal 13,55 W/kg, jeweils bei einer Blechdicke von 0,255 bis 0,280 mm, aufweist.

Bevorzugt betrifft die vorliegende Erfindung das erfindungsgemäße nicht kornorientierte Elektroband oder -blech, wobei es bei einer Polarisation P von 1,0 T und 700 Hz Verlustwerte von maximal 33 W/kg jeweils bei einer Blechdicke von 0,280 bis 0,310 mm, und Verlustwerte von maximal 31,5 W/kg, jeweils bei einer Blechdicke von 0,255 bis 0,280 mm, aufweist.

Bevorzugt betrifft die vorliegende Erfindung das erfindungsgemäße nicht kornorientierte Elektroband oder -blech, wobei es bei einer Polarisation P von 1,0 T und 1000 Hz Verlustwerte von maximal 58 W/kg jeweils bei einer Blechdicke von 0,280 bis 0,310 mm, und Verlustwerte von maximal 55 W/kg, jeweils bei einer Blechdicke von 0,255 bis 0,280 mm aufweist.

Des Weiteren weist das erfindungsgemäße nicht kornorientierte Elektroband oder -blech ein besonders vorteilhaftes, d.h. hohes, Verhältnis von der Polarisation J bei 50 Hz und 100 A/m und des Ummagnetisierungsverlustes P bei 1 T und 400 Hz auf. Dieses Verhältnis wird durch die folgende Formel (1) beschrieben:

$$100 * J_{100\,A/m,\,50\,Hz} / P_{1,0\,T,\,400\,Hz} \qquad (1)$$

Die vorliegenden Erfindung betrifft bevorzugt das erfindungsgemäße nicht kornorientierte Elektroband oder -blech, wobei das mit 100 multiplizierte Verhältnis der Polarisation J bei 50 Hz und 100 A/m und des Ummagnetisierungsverlustes P bei 1 T und 400 Hz mindestens 6,8, bevorzugt mindestens 7,0, beträgt.

Des Weiteren weist das erfindungsgemäße nicht kornorientierte Elektroband oder -blech ein vorteilhaftes, d.h.

hohes, mit 100 multipliziertes Verhältnis der Polarisation J bei 400 Hz und 100 A/m und des Ummagnetisierungsverlustes P bei 1 T und 400 Hz auf. Dieses Verhältnis wird durch die folgende Formel (2) beschrieben:

$$100 * J_{100\,A/m\,400\,Hz} / P_{1,0\,T\,400\,Hz} \qquad (2)$$

Die vorliegenden Erfindung betrifft bevorzugt das erfindungsgemäße nicht kornorientierte Elektroband oder -blech, wobei das Verhältnis der Polarisation J bei 400 Hz und 100 A/m und des Ummagnetisierungsverlustes P bei 1 T und 400 Hz mindestens 6,0, bevorzugt mindestens 6,1, beträgt.

Des Weiteren weist das erfindungsgemäße nicht kornorientierte Elektroband oder -blech bevorzugt eine Polarisation J bei einer Aussteuerung von 2500 A/m von mindestens 1,53 T, bei 5000 A/m von mindestens 1,63 und/oder bei 10000 A/m von mindestens 1,75, jeweils bei einer Blechdicke von 0,280 bis 0,310 mm, und eine Polarisation J bei einer Aussteuerung von 2500 A/m von mindestens 1,52 T, bei 5000 A/m von mindestens 1,62 und/oder bei 10000 A/m von mindestens 1,75, jeweils bei einer Blechdicke von 0,255 bis 0,280 mm auf.

Die vorliegende Erfindung betrifft auch das Verfahren zur Herstellung eines erfindungsgemäßen nicht kornorientierten Elektroband oder -blechs, umfassend mindestens die folgenden Verfahrensschritte:

(A) Bereitstellen eines warmgewalzten, warmbandgeglühten nicht kornorientierten Elektroband oder - blechs, bevorzugt über den konventionellen Fertigungsweg via Stranggießanlage, in einer Dicke von 1,5 bis 2,5 mm,
(B) Kaltwalzen des Elektroband oder -blechs aus Schritt (A) auf eine Dicke von 0,255 bis 0,310 mm, um ein Kaltband zu erhalten,
(C) Schlussglühen des Kaltbands aus Schritt (B), um das nicht kornorientierte Elektroband oder -blech zu erhalten, und
(D) Abkühlen des schlussgeglühten Kaltbands aus Schritt (C) mit einer üblichen mittleren Kühlrate von 1 K/s bis 10 K/s in einer nicht-oxidierenden Atmosphäre, insb. mit höheren Wasserstoffanteilen größer als 70%, bis zu einer unteren Grenztemperatur von 500 °C,

wobei in Schritt (C) das Kaltband aus Schritt (B) zunächst mit einer Aufheizrate von mindestens 40 K/s auf eine Temperatur von 860 bis 940 °C, bevorzugt 880 bis 920 °C, aufgeheizt wird und anschließend mit einer Aufheizrate von 3 bis 20 K/s auf eine Temperatur von 1050 bis 1070 °C, bevorzugt 1055 bis 1065 °C aufgeheizt wird.

Die einzelnen Schritte des erfindungsgemäßen Verfahrens werden im Folgenden detailliert beschrieben.

Schritt (A) des erfindungsgemäßen Verfahrens umfasst das Bereitstellen eines warmgewalzten, nicht kornorientierten Elektroband oder -blechs, bevorzugt über den konventionellen Fertigungsweg via Stranggießanlage oder über Dünnbrammenfertigung, in einer Dicke von 1,5 bis 2,5 mm.

Das in Schritt (A) des erfindungsgemäßen Verfahrens bereitgestellte warmgewalzte, nicht kornorientierte Elektroband oder -blech weist die oben genannte Zusammensetzung auf. Das Bereitstellen eines warmgewalzten, nicht kornorientierten Elektrobands in Schritt (A) des erfindungsgemäßen Verfahrens erfolgt bevorzugt über den konventionellen Fertigungsweg via Stranggießanlage oder über Dünnbrammenfertigung.

Die Herstellung des erfindungsgemäß bereitgestellten Warmbands kann weitestgehend konventionell erfolgen. Dazu kann zunächst eine Stahlschmelze mit einer der erfindungsgemäßen Vorgabe entsprechenden Zusammensetzung erschmolzen und zu einem Vormaterial vergossen werden, bei dem es sich bei konventioneller Fertigung um eine Bramme oder Dünnbramme handeln kann.

Das so erzeugte Vormaterial kann anschließend auf eine 1020 bis 1300 °C betragende Vormaterialtemperatur gebracht werden. Dazu wird das Vormaterial erforderlichenfalls wiedererwärmt oder unter Ausnutzung der Gießhitze auf der jeweiligen Zieltemperatur gehalten.

Das so erwärmte Vormaterial kann dann zu einem Warmband mit einer Dicke warmgewalzt werden, die typischerweise 1,5 bis 2,5 mm, beträgt. Das Warmwalzen beginnt dabei in an sich bekannter Weise bei einer Warmwalzanfangstemperatur in der Fertigstaffel von 1000 bis 1150 °C und endet mit einer Warmwalzendtemperatur von 700 bis 920 °C, insbesondere 780 bis 850 °C.

Das erhaltene Warmband kann anschließend auf eine Haspeltemperatur abgekühlt und zu einem Coil gehaspelt werden. Die Haspeltemperatur wird dabei idealerweise so gewählt, dass Probleme beim anschließend durchgeführten Kaltwalzen vermieden werden. In der Praxis beträgt die Haspeltemperatur hierzu beispielsweise höchstens 700 °C.

Das warmgewalzte Elektroband oder -blech aus Schritt (A) kann direkt in Schritt (B) des erfindungsgemäßen Verfahrens eingesetzt werden. In einer bevorzugten Ausführungsform des erfindungsgemäßen Verfahrens betrifft die vorliegende Erfindung das erfindungsgemäße Verfahren, wobei nach Schritt (A), d.h. vor Schritt (B), in einem Schritt (A') eine Haubenglühung bei einer Temperatur von 700 bis 800 °C erfolgt, bevorzugt bei einer Temperatur von 720 bis 760 °C. Mithin wird in einer bevorzugten Ausführung für Schritt (B) ein warmgewalztes, warmbandgeglühtes, nicht kornorientiertes Elektroband oder -blech, bevorzugt über den konventionellen Fertigungsweg via Stranggießanlage oder über Dünnbrammenfertigung, in einer Dicke von 1,5 bis 2,5 mm, bereitgestellt.

Schritt (B) des erfindungsgemäßen Verfahrens umfasst das Kaltwalzen des Elektroband oder -blechs aus Schritt (A) auf eine Dicke von 0,255 bis 0,310 mm, um ein Kaltband zu erhalten.

Schritt (B) des erfindungsgemäßen Verfahrens kann im Allgemeinen nach allen dem Fachmann bekannten Verfahren erfolgen.

Das aus Schritt (B) erhaltene Kaltband kann direkt in Schritt (C) des erfindungsgemäßen Verfahrens überführt werden.

Schritt (C) des erfindungsgemäßen Verfahrens umfasst das Schlussglühen des Kaltbands aus Schritt (B), um das nicht kornorientierte Elektroband oder -blech zu erhalten, wobei in Schritt (C) das Kaltband aus Schritt (B) zunächst mit einer Aufheizrate von mindestens 40 K/s auf eine Temperatur von 860 bis 940 °C, bevorzugt 880 bis 920 °C, aufgeheizt wird, anschließend mit einer Aufheizrate von 3 bis 20 K/s auf eine Temperatur von 1050 bis 1070 °C, bevorzugt 1055 bis 1065 °C aufgeheizt wird.

Das Schlussglühen in Schritt (C) des erfindungsgemäßen Verfahrens beinhaltet mindestens die zwei genannten Teilschritte, ggf. können weitere Erwärmungs- und/oder Abkühlungsstufen durchlaufen werden.

Schritt (C) des erfindungsgemäßen Verfahrens kann im Prinzip in jeder dem Fachmann bekannten Vorrichtung erfolgen, insbesondere in einem Durchlaufofen, besonders bevorzugt in einem horizontalen Durchlaufofen.

In einer bevorzugten Ausführungsform des erfindungsgemäßen Verfahrens erfolgt Schritt (C) bei geringen Bandzügen. Dies hat den Vorteil, dass nur geringe Kräfte auf das Kaltband während des Glühschritts ausgeübt werden, so dass die Anisotropie der Ummagnetisierungsverluste von Längs- und Querrichtung möglichst gering bleibt. Die vorliegende Erfindung betrifft daher bevorzugt das erfindungsgemäße Verfahren, wobei Schritt (C) bei Bandzügen von höchstens 10 N/mm$^2$ erfolgt.

Schritt (C) des erfindungsgemäßen Verfahrens erfolgt bevorzugt in einer reduzierenden Atmosphäre. Besonders bevorzugt erfolgt Schritt (C) des erfindungsgemäßen Verfahrens in einer Glühatmosphäre enthaltend mindestens 70 Vol.-%, insbesondere mindestens 85 Vol.-%, Wasserstoff. Neben Wasserstoff liegt in der Glühatmosphäre gegebenenfalls noch Stickstoffvor. Stickstoff führt durch Aufstickung der Oberfläche zu einer Verschlechterung der magnetischen Eigenschaften.

Schritt (C) des erfindungsgemäßen Verfahrens erfolgt bevorzugt bei einem niedrigen Taupunkt. Bevorzugt erfolgt Schritt (C) des erfindungsgemäßen Verfahrens bei einem Taupunkt von höchstens -10 °C, besonders bevorzugt höchstens -20 °C erfolgt.

Schritt (D) des erfindungsgemäßen Verfahrens umfasst das Abkühlen des schlussgeglühten Kaltbands aus Schritt (C) mit einer üblichen mittleren Kühlrate von 1 K/s bis 10 K/s in einer nicht-oxidierenden Atmosphäre, insb. mit höheren Wasserstoffanteilen größer als 70% bis zu einer unteren Grenztemperatur von 500 °C.

Nach Schritt (D) des erfindungsgemäßen Verfahrens liegt das erfindungsgemäße nicht kornorientierte Elektroband im Prinzip so vor, wie es in den beschriebenen Anwendungen eingesetzt werden kann. Gegebenenfalls kann das aus Schritt (D) erhaltene nicht kornorientierte Elektroband weiteren Verfahrensschritten unterzogen werden, beispielsweise Reinigung, Haspeln, Schneiden und/oder Stanzen in Elektrobleche etc.

Gegenstand der vorliegenden Erfindung ist somit auch ein erfindungsgemäßes nicht kornorientiertes Elektroband oder -blech wie oben beschrieben, mit der entsprechenden Zusammensetzung, hergestellt in einem erfindungsgemäßen Verfahren umfassend mindestens die Verfahrensschritte (A) bis (D), wie oben beschrieben.

Die vorliegende Erfindung betrifft auch ein aus dem erfindungsgemäßen nicht kornorientierten Elektroband oder -blech gefertigtes Bauteil für elektrotechnische Anwendungen, insbesondere Eisenkerne von rotierenden elektrischen Maschinen, insbesondere in Elektromotoren, beispielsweise in Elektro- oder Hybridfahrzeugen, und Generatoren. Entsprechende Verfahren zur Herstellung solcher Bauteile sind dem Fachmann an sich bekannt, beispielsweise Stanzen, Schneiden, Lasern, Kleben etc.

Die vorliegende Erfindung betrifft auch die Verwendung des erfindungsgemäßen nicht kornorientierten Elektrobands oder -blechs in Eisenkernen von rotierenden elektrischen Maschinen, insbesondere in Elektromotoren, beispielsweise in Elektro- oder Hybridfahrzeugen, und Generatoren.

Die Ummagnetisierungsverluste P können erfindungsgemäß durch alle dem Fachmann bekannten Verfahren bestimmt werden, insbesondere mittels eines Epsteinrahmens, insbesondere gemäß DIN EN 60404-2:2009-01: Magnetische Werkstoffe - Teil 2: Verfahren zur Bestimmung der magnetischen Eigenschaften von Elektroband und -blech mit Hilfe eines Epsteinrahmens". Dabei werden entsprechende Elektrobleche in Längs- und Quer- Streifen geschnitten und als Mischprobe im Epsteinrahmen vermessen.

Das hier beschriebene nicht kornorientierte Elektrobands charakterisiert eine Anisotropie der magnetischen Verlustwerte bei 1,5 T und 50 Hz in Längs- und Querrichtung von kleiner 20%.

**Beispiele**

Die nachfolgenden Ausführungsbeispiele dienen der näheren Erläuterung der Erfindung. Die eingesetzten Stahlzusammensetzungen werden in Tabelle 1 genannt.

**Tabelle 1: Stahlzusammensetzungen**

| Analyse | C | Si | Mn | P | S | Al | N | Ti | Cr | Spez. el. Widerstand bei 50 °C [$\mu\Omega$m] |
|---------|---|----|----|---|---|----|---|----|----|------------------------------------------------|
| P2 | 0,0020 | 3,22 | 0,154 | 0,009 | 0,0009 | 0,735 | 0,0023 | 0,0018 | 0,024 | 0,596 |
| P3 | 0,0030 | 3,23 | 0,158 | 0,012 | 0,0005 | 0,783 | 0,0010 | 0,0021 | 0,026 | 0,604 |
| P4 | 0,0014 | 3,20 | 0,153 | 0,009 | 0,0005 | 0,780 | 0,0011 | 0,0016 | 0,021 | 0,600 |
| P7 | 0,0017 | 3,23 | 0,155 | 0,012 | 0,0005 | 0,758 | 0,0014 | 0,0017 | 0,022 | 0,601 |
| P6 | 0,002 | 3,21 | 0,156 | 0,01 | 0,0005 | 0,733 | 0,0016 | 0,0024 | 0,022 | 0,595 |
| P5 | 0,0023 | 3,25 | 0,143 | 0,150 | 0,0013 | 0,951 | 0,0013 | 0,0027 | 0,022 | 0,647 |
| 1 | 0,0023 | 3,25 | 0,143 | 0,015 | 0,0013 | 0,951 | 0,0013 | 0,0027 | 0,022 | 0,628 |
| 2 | 0,0015 | 3,32 | 0,147 | 0,016 | 0,0005 | 0,976 | 0,0013 | 0,0021 | 0,031 | 0,640 |
| 3 | 0,0019 | 3,26 | 0,144 | 0,017 | 0,0017 | 0,993 | 0,0019 | 0,0019 | 0,030 | 0,635 |
| 4 | 0,0022 | 3,25 | 0,156 | 0,014 | 0,0005 | 0,968 | 0,0009 | 0,0032 | 0,032 | 0,631 |
| 5 | 0,0019 | 3,29 | 0,148 | 0,012 | 0,0012 | 1,03 | 0,0012 | 0,0021 | 0,033 | 0,643 |
| Alle Angaben, falls nicht anders angegeben, in Gew.-%, Rest Fe und unvermeidbare Verunreinigungen | | | | | | | | | | |

Es wurden erfindungsgemäße Beispiele 10 bis 20 und 22 bis 33, und Vergleichsproben V1 bis V9 und V21 hergestellt. Dazu wurde jeweils nach der Erschmelzung der Zusammensetzungen gemäß Tabelle 1 die erhaltene Bramme warmgewalzt, (gegebenenfalls) einer Warmband-Haubenglühung bei 740 °C unterzogen und gebeizt. Anschließend wurde das Material, auf eine Enddicke von 0,255 bis 0,310 mm kaltgewalzt (s. Tabelle 2 und 3) und dann schlussgeglüht. Die Vergleichsproben V1 bis V9 und V21 und die erfindungsgemäßen Beispiele 10 bis 20 und 22 bis 33 wurden nach den in den Tabellen 2 und 3 angegebenen Glühtemperaturen schlussgeglüht. Die erhaltenen Dicken sind ebenfalls in den Tabellen 2 und 3 angegeben. Die magnetischen Kennwerte, d.h. J 100 A/m 50 Hz, J 100 A/m 400 Hz, J 2500 A/m, J 5000 A/m, J 10000 A/m, P1,5T 50 Hz, P1,0T 400 Hz, P1,0T 700 Hz und P1,0T 1000 Hz, wurden jeweils für Proben nach der Schlussglühung bestimmt. Des Weiteren wurden noch die folgenden Verhältnisse bestimmt:

$$J_{100\ A/m,\ 50\ Hz} / P_{1,0\ T\ 400\ Hz} \quad (1)$$

(1)

$$J_{100\ A/m\ 400\ Hz} / P_{1,0\ T\ 400\ Hz} \quad (2)$$

**Tabelle 2: erfindungsgemäße Beispiele und Vergleichsbeispiele, Nenndicke 0,30 mm**

| Nr. | Analyse | Glühtemp. [°C] | Mittlere Heizrate 1 | Mittlere Heizrate 2 | Ist-Dicke [mm] | J100 50 Hz m | J100 400 Hz [T] | J2500 [T] | J5000 [T] | J10000 [T] | P1,5 50 Hz [W/kg] | $P_{1,0}$ 400 Hz [W/kg] | $P_{1,0}$ 700 Hz [W/kg] | $P_{1,0}$ 1000 Hz [W/kg] | (1) | (2) |
|---|---|---|---|---|---|---|---|---|---|---|---|---|---|---|---|---|
| V1 | P2 | 1030 | - | - | 0,298 | 0,868 | 0,743 | 1,56 | 1,65 | 1,77 | 2,37 | 15,5 | 44,2 | 62,9 | 5,60 | 4,79 |
| V2 | P3 | 1030 | - | - | 0,302 | 0,926 | 0,780 | 1,56 | 1,65 | 1,77 | 2,33 | 15,2 | 35,4 | 62,1 | 6,09 | 5,13 |
| V3 | P4 | 1030 | - | - | 0,303 | 0,933 | 0,792 | 1,55 | 1,65 | 1,77 | 2,42 | 15,5 | 43,9 | 62,6 | 6,02 | 5,11 |
| V4 | P7 | 1090 | - | - | 0,284 | 0,935 | 0,838 | 1,52 | 1,62 | 1,76 | 2,20 | 14,8 | 43 | 61,2 | 6,32 | 5,66 |
| V5 | P5 | 1015 | - | - | 0,293 | 0,894 | 0,774 | 1,55 | 1,64 | 1,76 | 2,40 | 15,1 | 34,8 | 60,8 | 5,92 | 5,12 |
| V6 | 3 | 1080 | - | - | 0,285 | 0,943 | 0,861 | 1,528 | 1,626 | 1,755 | 2,21 | 14,22 | 33,15 | 57,8 | 6,63 | 6,05 |
| V7 | 1 | 1090 | - | - | 0,291 | 0,971 | 0,866 | 1,537 | 1,637 | 1,765 | 2,11 | 14,44 | 34,06 | 59,9 | 6,72 | 6,00 |
| V8 | 2 | 1090 | - | - | 0,290 | 0,876 | 0,785 | 1,512 | 1,615 | 1,749 | 2,43 | 15,21 | - | - | 5,76 | 5,16 |
| V9 | 3 | 1100 | - | - | 0,291 | 0,936 | 0,820 | 1,547 | 1,646 | 1,772 | 2,15 | 14,55 | 34,01 | 58,4 | 6,43 | 5,64 |
| 10 | 3 | 1060 | 45 | 5 | 0,285 | 0,994 | 0,892 | 1,552 | 1,648 | 1,771 | 2,15 | 13,91 | 32,2 | 56,2 | 7,15 | 6,41 |
| 11 | 3 | 1060 | 45 | 5 | 0,287 | 0,999 | 0,897 | 1,552 | 1,648 | 1,771 | 2,15 | 13,88 | 32,2 | 56,3 | 7,20 | 6,46 |
| 12 | 2 | 1060 | 44 | 4 | 0,283 | 0,969 | 0,890 | 1,537 | 1,632 | 1,757 | 2,20 | 13,83 | 32,0 | 55,9 | 7,00 | 6,43 |
| 13 | 3 | 1060 | 44 | 5 | 0,291 | 0,978 | 0,862 | 1,560 | 1,652 | 1,770 | 2,26 | 14,17 | 32,6 | 57,0 | 6,90 | 6,08 |
| 14 | 3 | 1060 | 45 | 5 | 0,288 | 1,008 | 0,890 | 1,566 | 1,659 | 1,778 | 2,17 | 13,82 | 32,4 | 56,3 | 7,30 | 6,44 |
| 15 | 2 | 1060 | 44 | 5 | 0,288 | 1,008 | 0,924 | 1,539 | 1,635 | 1,759 | 2,18 | 13,67 | 31,7 | 55,5 | 7,38 | 6,76 |
| 16 | 2 | 1060 | 45 | 5 | 0,288 | 0,983 | 0,886 | 1,535 | 1,630 | 1,754 | 2,19 | 13,89 | 32,4 | 56,6 | 7,08 | 6,38 |
| 17 | 1 | 1060 | 45 | 5 | 0,287 | 0,990 | 0,884 | 1,548 | 1,644 | 1,767 | 2,17 | 14,03 | 32,8 | 57,6 | 7,06 | 6,30 |
| 18 | 1 | 1060 | 45 | 5 | 0,288 | 0,999 | 0,894 | 1,546 | 1,641 | 1,764 | 2,16 | 13,99 | 32,7 | 57,3 | 7,14 | 6,39 |
| 19 | 3 | 1060 | 45 | 5 | 0,287 | 1,001 | 0,881 | 1,554 | 1,650 | 1,772 | 2,18 | 13,98 | 32,6 | 57,0 | 7,16 | 6,30 |
| 20 | 3 | 1060 | 45 | 5 | 0,291 | 0,971 | 0,852 | 1,561 | 1,656 | 1,777 | 2,19 | 14,08 | 32,7 | 57,2 | 6,89 | 6,05 |

**Tabelle 3: erfindungsgemäße Beispiele und Vergleichsbeispiele, Nenndicke 0,27 mm**

| Nr. | Analyse | Glüh temp. [°C] | Mittlere Heizrate 1 | Mittlere Heizrate 2 | Ist Dicke [mm] | J100 50 Hz m | J100 400 Hz m | J2500 m | J5000 m | J10000 [T] | P1,5 50 Hz [W/kg] | P1,0 400 Hz [W/kg] | P1,0 700 Hz [W/kg] | P1,0 1000 Hz [W/kg] | (1) | (2) |
|---|---|---|---|---|---|---|---|---|---|---|---|---|---|---|---|---|
| V21 | P6 | 1030 | - | - | 0,266 | 0,939 | - | 1,530 | 1,630 | 1,750 | 2,39 | 14,10 | 39,60 | 55,8 | - | - |
| 22 | 4 | 1060 | 50 | 5 | 0,265 | 0,937 | 0,877 | 1,524 | 1,621 | 1,750 | 2,18 | 13,42 | 30,86 | 53,5 | 6,98 | 6,53 |
| 23 | 4 | 1060 | 50 | 5 | 0,272 | 0,966 | 0,896 | 1,531 | 1,628 | 1,757 | 2,15 | 13,53 | 31,36 | 54,6 | 7,14 | 6,63 |
| 24 | 4 | 1060 | 50 | 5 | 0,258 | 0,938 | 0,883 | 1,532 | 1,630 | 1,759 | 2,10 | 13,12 | 30,19 | 52,3 | 7,15 | 6,73 |
| 25 | 4 | 1060 | 50 | 5 | 0,264 | 0,996 | 0,948 | 1,527 | 1,624 | 1,754 | 2,11 | 12,99 | 30,03 | 52,2 | 7,67 | 7,29 |
| 26 | 5 | 1060 | 50 | 5 | 0,269 | 0,990 | 0,924 | 1,542 | 1,637 | 1,764 | 2,09 | 13,21 | 30,51 | 53,1 | 7,50 | 7,00 |
| 27 | 5 | 1060 | 50 | 5 | 0,263 | 0,991 | 0,935 | 1,536 | 1,633 | 1,759 | 2,13 | 13,10 | 30,05 | 52,1 | 7,57 | 7,14 |
| 28 | 5 | 1060 | 50 | 5 | 0,260 | 0,958 | 0,896 | 1,534 | 1,630 | 1,758 | 2,14 | 13,13 | 30,07 | 52,0 | 7,29 | 6,83 |
| 29 | 5 | 1060 | 50 | 5 | 0,259 | 0,969 | 0,914 | 1,536 | 1,632 | 1,760 | 2,12 | 13,02 | 29,89 | 51,8 | 7,44 | 7,02 |
| 30 | 5 | 1060 | 50 | 5 | 0,257 | 0,985 | 0,929 | 1,529 | 1,626 | 1,754 | 2,15 | 13,00 | 29,75 | 51,4 | 7,57 | 7,15 |
| 31 | 5 | 1060 | 50 | 5 | 0,268 | 0,978 | 0,909 | 1,532 | 1,629 | 1,757 | 2,12 | 13,35 | 30,76 | 53,3 | 7,33 | 6,81 |
| 32 | 5 | 1060 | 50 | 5 | 0,259 | 0,923 | 0,868 | 1,531 | 1,626 | 1,753 | 2,19 | 13,23 | 30,04 | 51,8 | 6,98 | 6,56 |
| 33 | 5 | 1060 | 50 | 5 | 0,259 | 0,943 | 0,880 | 1,529 | 1,626 | 1,753 | 2,18 | 13,29 | 30,37 | 52,6 | 7,10 | 6,62 |

- nicht bestimmt

**Gewerbliche Anwendbarkeit**

Das erfindungsgemäße nicht kornorientierte Elektroband oder -blech zeigt eine verbesserte Polarisation bei 100 bis 200 A/m, eine verbesserte Permeabilität bei 0,8 bis 1,2 T sowie gleichzeitig abgesenkte Ummagnetisierungsverluste bei niedrigen Frequenzen von 50 Hz und bei höheren Frequenzen von 400 bis 1000 Hz. Daher kann es vorteilhaft in rotierenden elektrischen Maschinen, insbesondere in Elektromotoren und Generatoren, eingesetzt werden.

**Patentansprüche**

1. Verfahren zur Herstellung eines nicht kornorientierten Elektrobands oder -blechs nach einem der Ansprüche 6 bis 11, umfassend mindestens die folgenden Verfahrensschritte:

   (A) Bereitstellen eines warmgewalzten, warmbandgeglühten, nicht kornorientierten Elektrobands oder -blechs, bevorzugt über den konventionellen Fertigungsweg via Stranggießanlage oder über Dünnbrammenfertigung, in einer Dicke von 1,5 bis 2,5 mm,
   (B) Kaltwalzen des Elektrobands oder -blechs aus Schritt (A) auf eine Dicke von 0,255 bis 0,31 mm, um ein Kaltband zu erhalten, und
   (C) Schlussglühen des Kaltbands aus Schritt (B), um das nicht kornorientierte Elektroband oder - blech zu erhalten, und
   (D) Abkühlen des schlussgeglühten Kaltbands aus Schritt (C) mit einer üblichen mittleren Kühlrate von 1 K/s bis 10 K/s in einer nicht-oxidierenden Atmosphäre, insb. mit höheren Wasserstoffanteilen größer als 70%, bis zu einer unteren Grenztemperatur von 500°C,

   **dadurch gekennzeichnet, dass** in Schritt (C) das Kaltband aus Schritt (B) zunächst mit einer Aufheizrate von mindestens 40 K/s auf eine Temperatur von 860 bis 940°C, bevorzugt 880 bis 920°C, aufgeheizt wird und anschließend mit einer Aufheizrate von 3 bis 20 K/s auf eine Temperatur von 1050 bis 1070°C aufgeheizt wird.

2. Verfahren nach Anspruch 2, **dadurch gekennzeichnet, dass** Schritt (C) bei Bandzügen von höchstens 10 N/mm$^2$ erfolgt.

3. Verfahren nach Anspruch 1 oder 2, **dadurch gekennzeichnet, dass** Schritt (C) in einer Glühatmosphäre enthaltend mindestens 70 Vol.-% Wasserstoff erfolgt.

4. Verfahren nach einem der Ansprüche 1 bis 3, **dadurch gekennzeichnet, dass** Schritt (C) bei einem Taupunkt von höchstens -10 °C erfolgt.

5. Verfahren nach einem der Ansprüche 1 bis 4, **dadurch gekennzeichnet, dass** für Schritt (B) ein warmgewalztes, warmbandgeglühtes, nicht kornorientiertes Elektroband oder -blech, bevorzugt über den konventionellen Fertigungsweg via Stranggießanlage oder über Dünnbrammenfertigung, in einer Dicke von 1,5 bis 2,5 mm, bereitgestellt wird.

6. Nicht kornorientiertes Elektroband oder -blech herstellbar durch das Verfahren gemäß Anspruch 1 mit folgender Zusammensetzung (alle Angaben in Gew.-%)

   3,20 bis 3,40 Si,
   0,85 bis 1,10 Al,
   0,07 bis zu 0,18 Mn,
   0,01 bis zu 0,04 P,
   0,0003 bis 0,0030 S,
   0,0005 bis 0,0025 N,
   0,0010 bis zu 0,0050 C,
   0,0015 zu 0,0040 Ti,
   0,01 bis 0,08 Cr
   bis zu 0,05 in Summe von Nb+Mo+V, Rest Fe und unvermeidbare Verunreinigungen unter 1 Gew.-%, **dadurch gekennzeichnet, dass** es einen spezifischen elektrischen Widerstand bei 50 °C von 0,62 bis 0,65 $\mu\Omega$m und eine Enddicke von 0,255 bis 0,31 mm aufweist.

7. Nicht kornorientiertes Elektroband oder -blech nach Anspruch 6, **dadurch gekennzeichnet, dass** das mit 100 multiplizierte Verhältnis der Polarisation bei 50 Hz und 100 A/m und des Ummagnetisierungsverlustes bei 1 T und 400 Hz mindestens 6,8 beträgt.

8. Nicht kornorientiertes Elektroband oder -blech nach einem der Ansprüche 6 oder 7, **dadurch gekennzeichnet, dass** das mit 100 multiplizierte Verhältnis der Polarisation bei 400 Hz und 100 A/m und des Ummagnetisierungsverlustes bei 1 T und 400 Hz mindestens 6,0 beträgt.

9. Nicht kornorientiertes Elektroband oder -blech nach einem der Ansprüche 6 bis 8, **dadurch gekennzeichnet, dass** es Verlustwerte von maximal 2,3 W/kg bei einer Polarisation P von 1,5 T und 50 Hz, maximal 14,2 W/kg bei einer Polarisation von 1,0 T und 400 Hz, maximal 33 W/kg bei einer Polarisation von 1,0 T und 700 Hz, maximal 58 W/kg bei einer Polarisation von 1,0 T und 1000 Hz jeweils bei einer Blechdicke von 0,280 bis 0,31 mm, aufweist und dadurch dass es Verlustwerte von maximal 2,2 W/kg bei einer Polarisation P von 1,5 T und 50 Hz, maximal 13,6 W/kg bei einer Polarisation von 1,0 T und 400 Hz, maximal 32 W/kg bei einer Polarisation von 1,0 T und 700 Hz, maximal 55 W/kg bei einer Polarisation von 1,0 T und 1000 Hz, jeweils bei einer Blechdicke von 0,255 bis 0,280 mm, aufweist.

10. Nicht kornorientiertes Elektroband oder -blech nach einem der Ansprüche 6 bis 9, **dadurch gekennzeichnet, dass** die Summe aus C, S, N und Ti höchstens 0,0090 Gew.-% beträgt.

11. Nicht kornorientiertes Elektroband oder -blech nach einem der Ansprüche 6 bis 10, **dadurch gekennzeichnet, dass** die Polarisation J bei einer Aussteuerung von 2500 A/m mindestens 1,53 T, bei 5000 A/m mindestens 1,63 und/oder bei 10000 A/m mindestens 1,75 T jeweils bei einer Blechdicke von 0,280 bis 0,31 mm, und eine Polarisation J bei einer Aussteuerung von 2500 A/m von mindestens 1,52 T, bei 5000 A/m von mindestens 1,62 und/oder bei 10000 A/m von mindestens 1,75, jeweils bei einer Blechdicke von 0,255 bis 0,280 mm beträgt.

12. Bauteil für elektrotechnische Anwendungen, insbesondere Eisenkerne von rotierenden elektrischen Maschinen, insbesondere in Elektromotoren, beispielsweise in Elektro- oder Hybridfahrzeugen, und Generatoren, gefertigt aus einem nicht kornorientierten Elektroband oder -blech gemäß einem der Ansprüche 6 bis 10.

13. Verwendung des nicht kornorientierten Elektrobands oder -blechs nach einem der Ansprüche 6 bis 10 in Eisenkernen von rotierenden elektrischen Maschinen, insbesondere in Elektromotoren, beispielsweise in Elektro- oder Hybridfahrzeugen, und Generatoren.

## Claims

1. Process for producing a non-oriented electrical steel strip or sheet as claimed in any of claims 6 to 11, comprising at least the following process steps:

   (A) provision of a hot-rolled, hot strip annealed non-oriented electrical steel strip or sheet, preferably by means of the conventional manufacturing route via a continuous casting plant or by means of thin-slab manufacture, in a thickness of from 1.5 to 2.5 mm,
   (B) cold rolling of the electrical steel strip or sheet from step (A) to a thickness of from 0.255 to 0.31 mm in order to obtain a cold-rolled strip,
   (C) final heat treatment of the cold-rolled strip from step (B) in order to obtain the non-oriented electrical steel strip or sheet, and
   (D) cooling of the finally heat-treated cold-rolled strip from step (C) at a usual average cooling rate of from 1 K/s to 10 K/s in a nonoxidizing atmosphere, in particular containing relatively high hydrogen contents above 70%, to a lower limiting temperature of 500°C,

   **characterized in that** the cold-rolled strip from step (B) is, in step (C), firstly heated at a heating rate of at least 40 K/s to a temperature of from 860 to 940°C, preferably from 880 to 920°C, and subsequently heated at a heating rate of from 3 to 20 K/s to a temperature of from 1050 to 1070°C.

2. The process as claimed in claim 2, **characterized in that** step (C) is carried out at strip tensions of not more than 10 N/mm$^2$.

3. The process as claimed in claim 1 or 2, **characterized in that** step (C) is carried out in a heat treatment atmosphere containing at least 70% by volume of hydrogen.

4. The process as claimed in any of claims 1 to 3, **characterized in that** step (C) is carried out at a dew point of not more than -10°C.

5. The process as claimed in any of claims 1 to 4, **characterized in that** a hot-rolled, hot strip annealed, non-oriented electrical steel strip or sheet is provided for step (B), preferably by means of the conventional manufacturing route via a continuous casting plant or by means of thin slab manufacture, in a thickness of from 1.5 to 2.5 mm.

6. A non-oriented electrical steel strip or sheet producible by the process according to claim 1 having the following composition (all figures in % by weight)

> from 3.20 to 3.40 of Si,
> from 0.85 to 1.10 of Al,
> from 0.07 to 0.18 of Mn,
> from 0.01 to 0.04 of P,
> from 0.0003 to 0.0030 of S,
> from 0.0005 to 0.0025 of N,
> from 0.0010 to 0.0050 of C,
> from 0.0015 to 0.0040 of Ti,
> from 0.01 to 0.08 of Cr,
> up to 0.05 in total of Nb+Mo+V, balance Fe and unavoidable impurities below 1% by weight, **characterized in that** it has a specific electrical resistance at 50°C of from 0.62 to 0.65 $\mu\Omega$m and a final thickness of 0.255 to 0.31 mm.

7. The non-oriented electrical steel strip or sheet as claimed in claim 6, **characterized in that** the ratio multiplied by 100 of the polarization at 50 Hz and 100 A/m and the magnetic loss at 1 T and 400 Hz is at least 6.8.

8. The non-oriented electrical steel strip or sheet as claimed in either claim 6 or 7, **characterized in that** the ratio multiplied by 100 of the polarization at 400 Hz and 100 A/m and the magnetic loss at 1 T and 400 Hz is at least 6.0.

9. The non-oriented electrical steel strip or sheet as claimed in any of claims 6 to 8, **characterized in that** it has loss values of not more than 2.3 W/kg at a polarization P of 1.5 T and 50 Hz, not more than 14.2 W/kg at a polarization of 1.0 T and 400 Hz, not more than 33 W/kg at a polarization of 1.0 T and 700 Hz, not more than 58 W/kg at a polarization of 1.0 T and 1000 Hz, in each case at a sheet thickness of from 0.280 to 0.31 mm, and **in that** it has loss values of not more than 2.2 W/kg at a polarization P of 1.5 T and 50 Hz, not more than 13.6 W/kg at a polarization of 1.0 T and 400 Hz, not more than 32 W/kg at a polarization of 1.0 T and 700 Hz, not more than 55 W/kg at a polarization of 1.0 T and 1000 Hz, in each case at a sheet thickness of from 0.255 to 0.280 mm.

10. The non-oriented electrical steel strip or sheet as claimed in any of claims 6 to 9, **characterized in that** the sum of C, S, N and Ti is not more than 0.0090% by weight.

11. The non-oriented electrical steel strip or sheet as claimed in any of claims 6 to 10, **characterized in that** the polarization J at a modulation of 2500 A/m is at least 1.53 T, at 5000 A/m is at least 1.63 and/or at 10 000 A/m is at least 1.75 T, in each case at a sheet thickness of from 0.280 to 0.31 mm, and a polarization J at a modulation of 2500 A/m of at least 1.52 T, at 5000 A/m of at least 1.62 and/or at 10 000 A/m of at least 1.75, in each case at a sheet thickness of from 0.255 to 0.280 mm.

12. A component for electrical applications, in particular iron cores of rotating electrical machines, in particular in electric motors, for example in electric vehicles or hybrid vehicles, and generators, manufactured from a non-oriented electrical steel strip or sheet as claimed in any of claims 6 to 10.

13. The use of the non-oriented electrical steel strip or sheet as claimed in any of claims 6 to 10 in iron cores of rotating electric machines, in particular in electric motors, for example in electric vehicles or hybrid vehicles, and generators.

**Revendications**

1. Procédé de fabrication d'une bande ou d'une tôle électrique à grains non orientés selon l'une des revendications 6 à 11, comprenant au moins les étapes de procédé suivantes :

(A) mise à disposition d'une bande ou d'une tôle électrique, laminée à chaud, recuite à chaud, à grains non orientés, de préférence par l'intermédiaire de la voie de fabrication classique par une installation de coulée continue ou d'une fabrication de brames minces, en une épaisseur de 1,5 à 2,5 mm,
(B) laminage à froid de la bande ou de la tôle électrique de l'étape (A) à une épaisseur de 0,255 à 0,31 mm, afin d'obtenir une bande froide et
(C) recuit final de la bande froide de l'étape (B) afin d'obtenir la bande ou la tôle électrique à grains non orientés et
(D) refroidissement de la bande froide recuite finie de l'étape (C) à une vitesse de refroidissement moyenne usuelle de 1 K/s à 10 K/s dans une atmosphère non oxydante, en particulier avec des proportions d'hydrogène élevées, supérieures à 70%, jusqu'à une température limite inférieure de 500°C,

**caractérisé en ce que**, dans l'étape (C), la bande froide de l'étape (B) est d'abord chauffée à une vitesse de chauffage d'au moins 40 K/s à une température de 860 à 940°C, de préférence de 880 à 920°C et ensuite chauffée à une vitesse de chauffage de 3 à 20 K/s à une température de 1050 à 1070°C.

2. Procédé selon la revendication 2, **caractérisé en ce que** l'étape (C) est effectuée à des tractions de bande d'au plus 10 N/mm$^2$.

3. Procédé selon la revendication 1 ou 2, **caractérisé en ce que** l'étape (C) est effectuée dans une atmosphère de recuit contenant au moins 70% en volume d'hydrogène.

4. Procédé selon l'une des revendications 1 à 3, **caractérisé en ce que** l'étape (C) est effectuée à un point de rosée d'au plus -10°C.

5. Procédé selon l'une des revendications 1 à 4, **caractérisé en ce que**, pour l'étape (B), une bande ou une tôle électrique laminée à chaud, recuite à chaud, à grains non orientés est mise à disposition de préférence par l'intermédiaire de la voie de fabrication classique par une installation de coulée continue ou d'une fabrication de brames minces, en une épaisseur de 1,5 à 2,5 mm.

6. Bande ou tôle électrique à grains non orientés, pouvant être fabriquée par le procédé selon la revendication 1, présentant la composition suivante (toutes les indications sont en % en poids)

3,20 à 3,40 de Si,
0,85 à 1,10 d'Al,
0,07 jusqu'à 0,18 de Mn,
0,01 jusqu'à 0,04 de P,
0,0003 à 0,0030 de S,
0,0005 à 0,0025 de N,
0,0010 jusqu'à 0,0050 de C,
0,0015 à 0,0040 de Ti,
0,01 à 0,08 de Cr
un total de jusqu'à 0,05 de Nb+Mo+V, le reste étant du Fe et des impuretés inévitables inférieures à 1% en poids, **caractérisée en ce qu'**elle présente une résistance électrique spécifique à 50°C de 0,62 à 0,65 $\mu\Omega$m et une épaisseur finale de 0,255 à 0,31 mm.

7. Bande ou tôle électrique à grains non orientés selon la revendication 6, **caractérisée en ce que** le rapport, multiplié par 100, de la polarisation à 50 Hz et à 100 A/m et de la perte totale spécifique à 1 T et à 400 Hz représente au moins 6,8.

8. Bande ou tôle électrique à grains non orientés selon la revendication 6 ou 7, caractériséè en ce que le rapport, multiplié par 100, de la polarisation à 400 Hz et à 100 A/m et de la perte totale spécifique à 1 T et à 400 Hz représente au moins 6,0.

9. Bande ou tôle électrique à grains non orientés selon l'une des revendications 6 à 8, **caractérisée en ce qu'**elle présente des valeurs de perte d'au maximum 2,3 W/kg à une polarisation P de 1,5 T et à 50 Hz, d'au maximum 14,2 W/kg à une polarisation de 1,0 T et à 400 Hz, d'au maximum 33 W/kg à une polarisation de 1,0 T et à 700 Hz, d'au maximum 58 W/kg à une polarisation de 1,0 T et à 1000 Hz, à chaque fois à une épaisseur de tôle de 0,280 à 0,31 mm et **en ce qu'**elle présente des valeurs de perte d'au maximum 2,2 W/kg à une polarisation P de 1,5 T et à 50 Hz, d'au maximum 13,6 W/kg à une polarisation de 1,0 T et à 400 Hz, d'au maximum 32 W/kg à une polarisation de 1,0 T et à 700 Hz, d'au maximum 55 W/kg à une polarisation de 1,0 T et à 1000 Hz, à chaque fois à une épaisseur de tôle de 0,255 à 0,280 mm.

10. Bande ou tôle électrique à grains non orientés selon l'une des revendications 6 à 9, **caractérisée en ce que** la somme de C, S, N et Ti représente au plus 0,0090% en poids.

11. Bande ou tôle électrique à grains non orientés selon l'une des revendications 6 à 10, **caractérisée en ce que** la polarisation J à une modulation de 2500 A/m représente au moins 1,53 T, à 5000 A/m au moins 1,63 et/ou à 10 000 A/m au moins 1,75 T, à chaque fois à une épaisseur de tôle de 0,280 à 0,31 mm, et une polarisation J à une modulation de 2500 A/m représente au moins 1,52 T, à 5000 A/m au moins 1,62 et/ou à 10 000 A/m au moins 1,75, à chaque fois à une épaisseur de tôle de 0,255 à 0,280 mm.

12. Composant pour des applications électrotechniques, en particulier des noyaux de fer de machines électriques rotatives, en particulier dans des moteurs électriques, par exemples dans des véhicules électriques ou hybrides, et des générateurs, fabriqués à partir d'une bande ou d'une tôle électrique à grains non orientés selon l'une des revendications 6 à 10.

13. Utilisation de la bande ou tôle électrique à grains non orientés selon l'une des revendications 6 à 10 dans des noyaux de fer de machines électriques rotatives, en particulier dans des moteurs électriques, par exemple dans des véhicules électriques ou hybrides, et des générateurs.

**EP 3 877 558 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2612942 A
- EP 2840157 A
- WO 0065103 A2
- JP 2013010982 A